# EUROPEAN PATENT APPLICATION

(11) **EP 4 138 153 A2**
(43) Date of publication of application: **22.02.2023**
(21) Application number: 22173372.8
(22) Date of filing: 13.05.2022
(51) Int. Cl.: H01M 4/131, H01M 4/36, H01M 4/525

(54) **POSITIVE ACTIVE MATERIAL FOR RECHARGEABLE LITHIUM BATTERY, PREPARING METHOD THEREOF, AND RECHARGEABLE LITHIUM BATTERY INCLUDING THE SAME**

(30) Priority: 17.08.2021 KR 20210108244
(71) Applicant: Samsung SDI Co., Ltd., Yongin-si, Gyeonggi-do 17084 (KR)
(72) Inventor: KIM, Hyunjeong, 17084 Yongin-si (KR); KANG, Gwiwoon, 17084 Yongin-si (KR); SONG, Jayhyok, 17084 Yongin-si (KR); SHIN, Dongwook, 17084 Yongin-si (KR); HONG, Soonkie, 17084 Yongin-si (KR)
(74) Representative: Marks & Clerk LLP

(57) **Abstract**

Disclosed is a positive electrode active material for a rechargeable lithium battery comprising a first and a second active material both comprising a lithium nickel based composite oxide having a nickel content of greater than or equal to 90 mol% based on the total amount of metals excluding lithium and are made of secondary particles on which a cobalt coating layer is present. The first positive electrode active material exhibits a particle diameter of 10 to 25 microns while the second positive electrode active material exhibits a particle diameter of 1 to 9 microns. Also disclosed are a method of preparing a positive active material for a rechargeable lithium battery that includes preparing a first aqueous solution that includes a cobalt salt a composite particles including a lithium nickel-based composite oxide and in the form of secondary particles in which a plurality of primary particles are aggregated, and has a pH of 6 to 8, adding an alkali material into the first aqueous solution to obtain a second aqueous solution, obtaining a pre-positive active material including the composite particles and a cobalt coating layer formed on the surface thereof in the second aqueous solution, heat-treating the pre-positive active material to obtain a final positive active material, a positive active material for a rechargeable lithium battery, and a rechargeable lithium battery.

## Description

### BACKGROUND

### 1. Field

A positive active material for a rechargeable lithium battery, a preparing method thereof, and a rechargeable lithium battery including the same are disclosed.

### 2. Description of the Related Art

A portable information device such as a cell phone, a laptop, smart phone, and the like or an electric vehicle has used a rechargeable lithium battery having high energy density and easy portability as a driving power source. Recently, research has been actively conducted to use a rechargeable lithium battery with high energy density as a driving power source or power storage power source for hybrid or electric vehicles.

Various positive active materials have been investigated to realize rechargeable lithium batteries for applications to the uses. Among them, lithium nickel-based oxide, lithium nickel manganese cobalt composite oxide, lithium nickel cobalt aluminium composite oxide, lithium cobalt oxide, and the like are mainly used as a positive active material. However, these positive active materials have structure collapses or cracks during the repeated charges and discharges and thus problems of deteriorating a long-term cycle-life of a rechargeable lithium battery and increasing resistance and thus exhibiting no satisfactory capacity characteristics. Accordingly, development of a novel positive active material securing long-term cycle-life characteristics as well as realizing high capacity and high energy density is required.

### SUMMARY

A positive active material for a rechargeable lithium battery with improved cycle-life characteristics and suppressed side reactions with electrolyte solution while realizing high capacity, a preparing method thereof, and a rechargeable lithium battery including the same are provided.

In an embodiment, a positive active material for a rechargeable lithium battery includes a first positive active material that includes a lithium nickel-based composite oxide having a nickel content of greater than or equal to 90 mol% based on the total amount of metals excluding lithium, wherein the first positive active material includes secondary particles in which a plurality of primary particles are aggregated, and includes a cobalt coating layer on the surface of the secondary particle, and the secondary particles have a particle diameter of 10 µm to 25 µm; and a second positive active material that includes a lithium nickel-based composite oxide having a nickel content of greater than or equal to 90 mol% based on the total amount of metals excluding lithium, wherein the second positive active material includes secondary particles in which a plurality of primary particles are aggregated, and includes a cobalt coating layer on the surface of the secondary particle, and the secondary particles have a particle diameter of 1 µm to 9 µm, wherein a ratio (X/Y) of the cobalt content (X, atomic%) on the surface of the secondary particle of the first positive active material to the cobalt content (Y, atomic%) on the surface of the secondary particle of the second positive active material is greater than 1.

In another embodiment, a method of preparing a positive active material for a rechargeable lithium battery includes preparing a first aqueous solution that includes composite particles including a lithium nickel-based composite oxide and including secondary particles in which a plurality of primary particles are aggregated and a cobalt salt, and has a pH of 6 to 8, dripping an alkali material into the first aqueous solution to obtain a second aqueous solution, obtaining a pre-positive active material including the composite particles and a cobalt coating layer formed on the surface thereof in the second aqueous solution, and heat-treating the pre-positive active material to obtain a final positive active material.

In another embodiment, a rechargeable lithium battery including a positive electrode including the positive active material, a negative electrode, and an electrolyte is provided.

At least some of the above and other features of the invention are set out in the claims.

The positive active material for a rechargeable lithium battery prepared according to an embodiment and a rechargeable lithium battery including the same may exhibit suppressed side reactions and improved cycle-life characteristics and safety while realizing a high capacity and high energy density.

### BRIEF DESCRIPTION OF THE DRAWINGS

FIG. 1 is a schematic view illustrating a rechargeable lithium battery according to an embodiment.
FIG. 2 is a scanning electron microscope photograph of the positive active material in the washing step of Comparative Example 1.
FIG. 3 is a scanning electron microscope photograph of the pre-positive active material of Comparative Example 1.
FIGS. 4 and 5 are scanning electron micrographs of the final positive active material of Comparative Example 1.
FIG. 6 is a scanning electron microscope photograph of the positive active material in the washing step of Example 1.
FIG. 7 is a scanning electron microscope photograph of the pre-positive active material of Example 1.
FIGS. 8 and 9 are scanning electron micrographs of the final positive active material of Example 1.
FIG. 10 is a graph of measuring the zeta potential through ESA analysis for the positive active materials of Comparative Examples 1 and 2.
FIG. 11 is a graph showing the room temperature cycle-life characteristics of the battery cells manufactured in Comparative Example 1 and Example 1.
FIG. 12 is a graph showing high-temperature cycle-life characteristics of the battery cells manufactured in Comparative Example 1 and Example 1.
FIG. 13 is an energy dispersive X-ray spectroscopy (EDS) photograph of the pre-positive active material of Example 1.
FIG.14 is an energy dispersive X-ray spectroscopy (EDS) photograph of the final positive active material of Example 1.
FIG. 15 is an energy dispersive X-ray spectroscopy (EDS) photograph of the pre-positive active material of Comparative Example 1.
FIG.16 is an energy dispersive X-ray spectroscopy (EDS) photograph of the final positive active material of Comparative Example 1.

### DETAILED DESCRIPTION

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present disclosure. The singular expression includes the plural expression unless the context clearly dictates otherwise.

As used herein, "combination thereof" means a mixture, laminate, composite, copolymer, alloy, blend, reaction product, and the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

In addition, the "particle diameter" described in the present disclosure may refer an average particle diameter. The average particle diameter may be measured by a method well known to those skilled in the art, for example, may be measured by a particle size analyzer, or may be measured by a transmission electron micrograph or a scanning electron micrograph. Alternatively, it is possible to obtain an average particle diameter value by measuring using a dynamic light scattering method, performing data analysis, counting the number of particles for each particle size range, and calculating from this. Unless otherwise defined, the average particle diameter refers to the diameter (D50) of particles having a cumulative volume of 50 volume% in the particle size distribution. Further, the average particle diameter may be measured by an optical microscope photograph in the following manner: 50 particles are randomly selected in an SEM image, parallel lines are drawn to sandwich the projection images of the particles, and the largest distance between the parallel lines is measured with respect to each of the particles to determine their particle diameters. The particle size distribution is then obtained from the measured particle diameters, where D50 of the particles having a cumulative volume of 50 % is taken as the average particle size.

### Positive Active Material and Preparing Method Thereof

In general, a high nickel-based positive active material with a high nickel content has an advantage of realizing high capacity but, since a layered structure on the surface thereof collapses according to repeated charges and discharges, has a drawback of deteriorating cycle-life or safety due to a side reaction with an electrolyte solution. In order to solve this drawback, there have been attempts to coating cobalt and forming a cobalt-rich layer on the surface of the positive active material in a wet coating method to control the side reaction and improve cycle-life performance.

However, in the conventional wet coating method, the nickel content in the active material is higher, a cobalt compound is not uniformly but nonuniformly coated in a lump on the active material surface, and this cobalt coating layer rather works as resistance and thus deteriorates capacity and charge and discharge efficiency. The conventional wet coating method is a method in which the positive active material is added to an aqueous solution including an alkali material such as NaOH, washed, and then a cobalt salt is slowly added thereto. Herein, pH is about 13.4 or so at the initial washing but reduced down to pH 7.4, as the cobalt salt is added thereto.

On the contrary, an embodiment uses a coating method of first adding the cobalt salt to distilled water, adding the active material thereto to perform the washing, and then, slowly adding the alkali material such as NaOH and the like thereto to increase pH from 7.4 to 13.4.

Specifically, in an embodiment, a method of preparing a positive active material for a rechargeable lithium battery includes preparing a first aqueous solution that includes a cobalt salt and composite particles including a lithium nickel-based composite oxide and in the form of secondary particles in which a plurality of primary particles are aggregated, wherein the first aqueous solution has a pH of about 6 to about 8, adding an alkali material into the first aqueous solution (e.g. dripping an alkali material, or adding the alkali material dropwise into the first aqueous solution) to obtain a second aqueous solution, obtaining a pre-positive active material including the composite particles and a cobalt coating layer formed on the surface thereof in the second aqueous solution, and heat-treating the pre-positive active material to obtain a final positive active material.

Through the above method, a positive active material coated with a high-density cobalt compound on the surface very uniformly may be obtained, a positive active material coated with a cobalt compound uniformly to the inner portion of the positive active material secondary particles, that is, to the surface (grain boundary) of the primary particles in the inner portion the secondary particles may be obtained, and an amount of the cobalt compound coated on the inner portion of the secondary particles may be larger than the conventional positive active material.

In particular, in the case of an active material having a very high nickel concentration, for example, when the nickel content based on the total amount of the metal excluding lithium in the positive active material is greater than or equal to about 80 mol% or greater than or equal to about 90 mol%, a uniform cobalt coating is more difficult. However, according to the preparing method according to an embodiment, even when the nickel content is greater than or equal to about 90 mol%, a very uniform high-density coating may be obtained.

Such a positive active material has a high initial discharge capacity, high initial charge/discharge efficiency, and has excellent cycle-life characteristics while realizing a very high capacity.

In the method of preparing the positive active material, the composite particles include a lithium nickel-based composite oxide, and the lithium nickel-based composite oxide may also be called a type of nickel-based positive active material and may be, for example, represented by Chemical Formula 1.

[Chemical Formula 1] Liₐ₁Niₓ₁M¹_{y1}M²_{1-x1-y1}O₂

In Chemical Formula 1, 0.9≤a1≤1.8, 0.3≤x1≤1, 0≤y1≤0.7, and M¹ and M² are each independently selected from Al, B, Ce, Co, Cr, F, Mg, Mn, Mo, Nb, P, S, Si, Sr, Ti, V, W, Zr, and a combination thereof.

In Chemical Formula 1, for example, 0.3≤x1≤1 and 0≤y1≤0.7, or 0.4≤x1≤1 and 0≤y1≤0.6, or 0.5≤x1≤1 and 0≤y1≤0.5, or 0.6≤x1≤1 and 0≤y1≤0.4, or 0.7≤x1≤1 and 0≤y1≤0.3, or 0.8≤x1≤1 and 0≤y1≤0.2, or 0.9≤x1≤1 and 0≤y1≤0.1.

The lithium nickel-based composite oxide may be, for example, represented by Chemical Formula 2.

[Chemical Formula 2] Liₐ₂Niₓ₂Co_{y2}M³_{1-x2-y2}O₂

In Chemical Formula 2, 0.9≤a2≤1.8, 0.3≤x2<1, 0<y2≤0.7, and M³ is selected from Al, B, Ce, Cr, F, Mg, Mn, Mo, Nb, P, S, Si, Sr, Ti, V, W, Zr, and a combination thereof.

In Chemical Formula 2, for example, 0.3≤x2<1 and 0<y2≤0.7, or 0.4≤x2<1 and 0<y2≤0.6, or 0.5≤x2<1 and 0<y2≤0.5, or 0.6≤x2<1 and 0<y2≤0.4, or 0.7≤x2<1 and 0<y2≤0.3, or 0.8≤x2<1 and 0<y2≤0.2, or 0.9≤x2<1 and 0<y2≤0.1.

The lithium nickel-based composite oxide may be, for example, represented by Chemical Formula 3.

[Chemical Formula 3] Liₐ₃Niₓ₃Co_{y3}Al_{z3}M⁴_{1-x3-y3-z3}O₂

In Chemical Formula 3, 0.9≤a3≤1.8, 0.3≤x3<1, 0<y3<0.7, 0<z3<0.7, and M⁴ is selected from B, Ce, Cr, F, Mg, Mn, Mo, Nb, P, S, Si, Sr, Ti, V, W, Zr, and a combination thereof.

In Chemical Formula 3, for example, 0.3≤x3<1, 0<y3<0.7, and 0<z3<0.7, or 0.4≤x3<1, 0<y3<0.6, and 0<z3<0.6, or 0.5≤x3<1, 0<y3<0.5, and 0<z3<0.5, or 0.6≤x3<1, 0<y3<0.4, and 0<z3<0.4, or 0.7≤x3<1, 0<y3<0.3, and 0<z3<0.3, or 0.8≤x3<1, 0<y3<0.2, and 0<z3<0.2, or 0.9≤x3<1, 0<y3<0.1, and 0<z3<0.1.

An average particle diameter of the composite particles may be, for example, about 1 µm to about 30 µm, for example, about 2 µm to about 25 µm. For example, the composite particle may be a mixture of large particles and small particles, which will be described later.

In the preparing method, the cobalt salt may include, for example, cobalt sulfate, cobalt nitrate, cobalt carbonate, or a combination thereof.

The preparing of the first aqueous solution may be for example to add the cobalt salt to distilled water and then, adding the composite particles thereto. In addition, the preparing of the first aqueous solution may include mixing the composite particles and the cobalt salt. The composite particles may be washed in the first aqueous solution.

The alkali material may be, for example, NaOH, NH₄OH, KOH, or a combination thereof or in an alkali aqueous solution state including the same. The second aqueous solution prepared by adding the alkali material to the first aqueous solution may have final pH in a range of about 12 to about 14, for example, about 13 to about 14. The second aqueous solution may be obtained by adding (e.g. dripping) the alkali material to the first aqueous solution. At this time, the composite particles may be coated with cobalt. It is understood that the composite particles may be washed in the aqueous solution and coated with cobalt at the same time.

The pre-positive active material obtained from the second aqueous solution is in a state that a cobalt compound is coated on the surface of the composite particles. This pre-positive active material may be a dried product obtained by drying the composite particles (coated with a cobalt compound) obtained from the second aqueous solution. On the surface of the pre-positive active material, the cobalt content (A) based on the total amount of transition metals excluding lithium may range from about 56 atomic% to about 90 atomic%, for example, about 58 atomic% to about 90 atomic%, about 60 atomic% to about 90 atomic%, or about 70 atomic% to about 90 atomic%.

The final positive active material is obtained as a final product of the pre-positive active material after the heat treatment, through which some of the cobalt compound coated on the surface of the composite particles is understood to penetrate into the secondary particles of the positive active material.

On the surface of the final positive active material, the cobalt content (B) based on the total amount of transition metals excluding lithium may range from about 15 atomic% to about 55 atomic%, for example, about 20 atomic% to about 52 atomic%, about 25 atomic% to about 50 atomic%, about 30 atomic% to about 45 atomic%, or about 34 atomic% to about 38 atomic%.

A ratio (B/A) of the cobalt content (B) based on the total amount of transition metals excluding lithium on the surface of the final positive active material to the cobalt content (A) based on the total amount of transition metals excluding lithium on the surface of the pre-positive active material may range from about 0.3 to about 0.49, for example, about 0.35 to about 0.49, or about 0.40 to about 0.49.

The amount (corresponding to B) of the cobalt compound remaining on the surface of the positive active material based on the total amount (corresponding to A) of the cobalt compound coated on the positive active material is understood to be in a range of about 30 at% to about 49 at%, while the remaining amount (corresponding to A-B) of the cobalt compound internally penetrated into the active material is in a range of about 51 at% to about 70 at%.

In this way, when the cobalt content (A) on the surface of the pre-positive active material, the cobalt content (B) on the surface of the final positive active material, and the ratio (B/A) thereof respectively satisfy the ranges, since the cobalt contents on the surface and inside of the positive active material are optimized, the positive active material may have almost no structural collapse according to repeated charges and discharges as well as realizes high capacity, and accordingly, a rechargeable lithium battery including the same may realize high initial discharge capacity, high charge/discharge efficiency, and excellent cycle-life characteristics as well as high capacity and high energy density.

According to the conventional cobalt coating method, the ratio (B/A) of the B relative to the A is greater than or equal to about 0.59. On the contrary, when a positive active material is prepared in the method according to an embodiment, the ratio (B/A) of the B relative to the A may be in a range of about 0.3 to about 0.49, and this positive active material has almost no structural collapse despite the repeated charges and discharges and also, exhibits excellent cycle-life characteristics and secures safety.

Specifically, the final positive active material may include secondary particles in which a plurality of primary particles are aggregated and the final positive active material may include a first coating portion that is a cobalt coating layer on the surface of the secondary particle, and may further include a second coating portion that is a cobalt coating layer on the surface of the primary particles in the inner portion of the secondary particles.

The second coating portion is present in the inner portion rather than the surface of the secondary particle, and it is coated along the interface of the primary particles in the inner portion of the secondary particle, and thus it may be expressed as being coated at the grain boundary. Here, the inner portion of the secondary particles refers to the entire interior except for the surface, for example, may mean the entire interior from a depth of approximately 2 µm from the outer surface. According to an embodiment, the cobalt compound may be coated on the entire grain boundary in the inner portion of the secondary particles regardless of the depth from the surface.

The ratio (C/(C+D)) of the cobalt content of the first coating portion based on the sum of the cobalt content (C) of the first coating portion and the cobalt content (D) of the second coating portion in the final positive active material may range from about 0.30 to about 0.49, for example, about 0.35 to about 0.49, or about 0.40 to about 0.49. When the ratio of the cobalt contents in the first coating portion and the second coating portion is within the range, the positive active material may realize high capacity, there is almost no collapse of the structure according to the repetition of charge and discharge, and thus a rechargeable lithium battery including the same may realize high initial discharge capacity and charge and discharge efficiency, and excellent cycle-life characteristics while realizing high capacity and high energy density.

In the final positive active material, the first coating portion refers to a cobalt coating layer present on the surface of the positive active material, and the thickness thereof may be about 1 nm to about 500 nm, for example, about 1 nm to about 400 nm, or about 50 nm to about 300 nm. The second coating portion refers to a cobalt coating layer present at the grain boundary in the inner portion of the positive active material, and the thickness thereof may range from about 1 nm to about 250 nm, about 1 nm to about 200 nm, about 5 nm to about 150 nm, or about 10 nm to about 100 nm. In the positive active material according to an embodiment, the first coating portion and the second coating portion may be coated very uniformly while having the thickness range as described above. The first coating portion and the second coating portion may enable the positive active material to realize a long cycle life without structural collapse even after repeated charging and discharging, and may effectively suppress side reactions with the electrolyte solution.

The final positive active material may be a positive active material including a lithium nickel-based composite oxide, and may include the aforementioned compound represented by Chemical Formula 1, Chemical Formula 2, or Chemical Formula 3, a particle diameter (e.g. an average particle diameter) thereof may be about 1 µm to about 30 µm or about 2 µm to about 25 µm, and the final positive active material may be a mixed form of large particles and small particles as will be described later.

Meanwhile, in an embodiment, a mixture of large particles and small particles may be used as the composite particles. For example, the composite particles may be a mixture of large particles having a particle diameter (e.g. average particle diameter) of about 10 µm to about 25 µm and small particles having a particle diameter (e.g. average particle diameter) of about 1 µm to about 9 µm. Accordingly, the final positive active material may be a mixture of a first positive active material having a particle diameter of about 10 µm to about 25 µm and a second positive active material having a particle diameter of 1 µm to 9 µm.

When the large particles and the small particles are mixed in this way, according to the conventional cobalt wet coating method, as for the pre-positive active material dried before the heat treatment, the larger particles have a higher ratio of cobalt to transition metal than the small particles, but in the final positive active material completed with coating through the heat treatment, the small particles have a higher ratio of cobalt to transition metal than the large particles.

On the contrary, according to the preparing method of an embodiment, when the large particles are mixed with the small particles, the cobalt content is equally higher on the surface of the large particles than that of the small particles in the pre-positive active material, but in the final positive active material, unlike the conventional method, the cobalt content is much higher on the surface of the large particles than that of the small particles. That is, a ratio (X/Y) of the cobalt atomic content (X) based on the total amount of transition metals excluding lithium on the surface of the first positive active material to the cobalt atomic content (Y) based on the total amount of transition metals excluding lithium on the surface of the second positive active material may be greater than about 1. A rechargeable lithium battery including the positive active material satisfying these exhibits high initial discharge capacity and high charge and discharge efficiency and simultaneously, excellent cycle-life characteristics as well as realizes high capacity and high energy density.

The cobalt content (X) based on the total amount of transition metals excluding lithium on the surface of the secondary particle of the first positive active material may range from about 25 atomic% to about 60 atomic%, for example about 30 atomic% to about 55 atomic%, or about 35 atomic% to about 50 atomic%.

In addition, the cobalt content (Y) based on the total amount of transition metals excluding lithium on the surface of the secondary particle of the second positive active material may range from about 15 atomic% to about 45 atomic%, for example about 20 atomic% to about 43 atomic%, or about 25 atomic% to about 40 atomic%.

On the entire surface of the positive active material including the first positive active material and the second positive active material, a cobalt content based on the total amount of transition metals excluding lithium may range from about 20 atomic% to about 55 atomic%, for example about 25 atomic% to about 53 atomic%, or about 30 atomic% to about 50 atomic%.

When the cobalt content on each surface of the first positive active material and the second positive active material is equal to that on the entire surface of the positive active material including the same, the positive active material may exhibit excellent charge and discharge efficiency and cycle-life characteristics as well as high capacity and high energy density.

In the composite particles, the large particles have a particle diameter of about 10 µm to about 25 µm, for example, about 10 µm to about 20 µm, or about 12 µm to about 20 µm. The small particles have a particle diameter of about 1 µm to about 9 µm, for example, about 1 µm to about 8 µm, or about 2 µm to about 6 µm. When the large and small particles of the composite particles respectively have the above particle diameter ranges, a positive active material and a rechargeable lithium battery prepared therefrom may realize very high energy density and simultaneously, exhibit excellent charge and discharge efficiency and cycle-life characteristics.

When the composite particles are a mixture of large particles and small particles, the composite particles may be a mixture of about 50 wt% to about 90 wt% of the large particles and about 10 wt% to about 50 wt% of the small particles, for example, about 60 wt% to about 90 wt% of the large particles and about 10 wt% to about 40 wt% of the small particles. In this case, the final positive active material may exhibit a very high energy density, and at the same time, high charge/discharge efficiency and cycle-life characteristics may be realized.

### High Nickel-based Bimodal Positive Active Material

In an embodiment, a positive active material for a rechargeable lithium battery including a first positive active material and a second positive active material is provided. The first positive active material is a positive active material that includes a lithium nickel-based composite oxide having a nickel content of greater than or equal to about 90 mol% based on the total amount of metals excluding lithium, the first positive active material includes secondary particles in which a plurality of primary particles are aggregated, the first positive active material includes a cobalt coating layer on the surface of the secondary particle, and the secondary particles have a particle diameter of about 10 µm to about 25 µm. The second positive active material is a positive active material including a lithium nickel-based composite oxide having a nickel content of greater than or equal to about 90 mol% based on the total amount of metals excluding lithium, the second positive active material includes secondary particles in which a plurality of primary particles are aggregated, the second positive active material includes a cobalt coating layer on the surface of the secondary particle, and the secondary particles have a particle diameter of about 1 µm to about 9 µm.

Herein, a ratio (X/Y) of the cobalt content (X, atomic%) based on the total amount of transition metals excluding lithium on the surface of the secondary particle of the first positive active material to the cobalt content (Y, atomic%) based on the total amount of transition metals excluding lithium on the surface of the secondary particle of the second positive active material is greater than 1.

This positive active material for a rechargeable lithium battery may realize very high capacity and very high energy density and simultaneously, exhibit high initial discharge capacity and charge/discharge efficiency and excellent cycle-life characteristics.

The X/Y ratio may be, for example, about 1.01 to about 10, about 1.01 to about 8, about 1.01 to about 6, about 1.01 to about 4, about 1.01 to about 3, about 1.01 to about 2, or about 1.1 to about 2.

The cobalt content (X) based on the total amount of transition metals excluding lithium on the surface of the secondary particle of the first positive active material, the cobalt content (Y) based on the total amount of transition metals excluding lithium on the surface of the secondary particle of the second positive active material, and the cobalt content based on the total amount of transition metals excluding lithium on the entire surface of the positive active material are the same as described above in the method of preparing the positive active material.

The first positive active material is a type of large particles, and the particle diameter of the secondary particles ranges from about 10 µm to about 25 µm, for example, about 10 µm to about 20 µm, or about 12 µm to about 20 µm. The second positive active material is a type of small particles, and the particle diameter of the secondary particles ranges from about 1 µm to about 9 µm, for example, about 1 µm to about 8 µm, or about 2 µm to about 6 µm. When the particle diameters of the first positive active material and the second positive active material are within each range, the positive active material and the rechargeable lithium battery including them may realize very high energy density and, at the same time, may exhibit excellent charge/discharge efficiency and cycle-life characteristics.

Herein, each of the first positive active material and the second positive active material includes a lithium nickel-based composite oxide having a nickel content of greater than or equal to about 90 mol% based on the total amount of metals excluding lithium, and such a lithium nickel-based composite oxide may be represented by any one of Chemical Formula 11, Chemical Formula 12, and Chemical Formula 13.

[Chemical Formula 11] Liₐ₁₁Niₓ₁₁M¹¹y₁₁M¹²_{1-x11-y11}O₂

In Chemical Formula 11, 0.9≤a11≤1.8, 0.9≤x11≤1, 0≤y11≤0.1, and M¹¹ and M¹² are each independently selected from Al, B, Ce, Co, Cr, F, Mg, Mn, Mo, Nb, P, S, Si, Sr, Ti, V, W, Zr, and a combination thereof.

[Chemical Formula 12] Liₐ₁₂Niₓ₁₂Co_{y12}M¹³_{1-x12-y12}O₂

In Chemical Formula 12, 0.9≤a12≤1.8, 0.9≤x12<1, 0<y12≤0.1, and M¹³ is selected from Al, B, Ce, Cr, F, Mg, Mn, Mo, Nb, P, S, Si, Sr, Ti, V, W, Zr, and a combination thereof.

[Chemical Formula 13] Liₐ₁₃Niₓ₁₃Co_{y13}Al_{y13}M1⁴_{1-x13-y13-z13}O₂

In Chemical Formula 13, 0.9≤a13≤1.8, 0.9≤x13<1, 0<y13<0.1, 0<z13<0.1, and M¹⁴ is selected from B, Ce, Cr, F, Mg, Mn, Mo, Nb, P, S, Si, Sr, Ti, V, W, Zr, and a combination thereof.

In addition, each of the first positive active material and the second positive active material may include a first coating portion that is a cobalt coating layer on the surface of the secondary particles, and may further include a second coating layer that is a cobalt coating layer on the surfaces of the primary particles in the inner portion of the secondary particles. Detailed descriptions of the first coating portion and the second coating portion are the same as described above.

In the first positive active material, a ratio (C1/(C1+D1)) of the cobalt content (C1) of the first coating portion to the sum of the cobalt content (C1) of the first coating portion and the cobalt content (D1) of the second coating portion may range from about 0.20 to about 0.49, for example about 0.25 to about 0.49, about 0.30 to about 0.49, or about 0.40 to about 0.49.

In addition, in the second positive active material, a ratio (C2/(C2+D2)) of the cobalt content (C2) of the first coating portion to the sum of the cobalt content (C2) of the first coating portion and the cobalt content (D2) of the second coating portion may range from about 0.20 to about 0.49, for example about 0.25 to about 0.49, about 0.30 to about 0.49, or about 0.40 to about 0.49.

When the first coating portion and the second coating portion have the above cobalt content ratios, the positive active material has almost no structural collapse according to repeated charges and discharges as well as realizes high capacity, and accordingly, a rechargeable lithium battery including the same may realize high initial discharge capacity and charge/discharge efficiency and excellent cycle-life characteristics as well as realize high capacity and high energy density.

The first positive active material may be included in an amount of about 50 wt% to about 90 wt% based on the total amount of the first positive active material and the second positive active material, while the second positive active material may be included in an amount of about 10 wt% to about 50 wt%, for example, the first positive active material may be included in an amount of about 60 wt% to about 90 wt%, while the second positive active material may be included in an amount of about 10 wt% to about 40 wt%. When the first positive active material and the second positive active material are included in the above content ranges, a positive active material and a rechargeable lithium battery including the same may exhibit very high energy density and simultaneously, high charge and discharge efficiency and cycle-life characteristics.

### Positive Electrode

A positive electrode for a rechargeable lithium battery may include a current collector and a positive active material layer on the current collector. The positive active material layer may include the aforementioned positive active material, and may further include a binder and/or a conductive material.

The binder improves binding properties of positive active material particles with one another and with a current collector. Examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The content of the binder in the positive active material layer may be about 1 wt% to about 5 wt% based on the total weight of the positive active material layer.

The conductive material is included to provide electrode conductivity. Any electrically conductive material may be used as a conductive material unless it causes a chemical change. Examples of the conductive material may include a carbon-based material such as natural graphite, artificial graphite, carbon black, acetylene black, ketjen black, a carbon fiber, and the like; a metal-based material of a metal powder or a metal fiber including copper, nickel, aluminium, silver, and the like; a conductive polymer such as a polyphenylene derivative; or a mixture thereof.

The content of the conductive material in the positive active material layer may be about 1 wt% to about 5 wt% based on the total weight of the positive active material layer.

An aluminium foil may be used as the current collector, but is not limited thereto.

### Negative Electrode

A negative electrode for a rechargeable lithium battery includes a current collector and a negative active material layer on the current collector. The negative active material layer may include a negative active material, and may further include a binder and/or a conductive material.

The negative active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative active material. The crystalline carbon may be non-shaped, or plate, flake, spherical, or fiber shaped natural graphite or artificial graphite. The amorphous carbon may be a soft carbon, a hard carbon, a mesophase pitch carbonization product, calcined coke, and the like.

The lithium metal alloy includes an alloy of lithium and an element selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative active material or a Sn-based negative active material. The Si-based negative active material may include silicon, a silicon-carbon composite, SiOₓ (0 < x < 2), a Si-Q alloy (wherein Q is an alkali metal, an alkaline-earth metal, a Group 13 element, a Group 14 element, a Group 15 element, a Group 16 element, a transition metal, a rare earth element, and a combination thereof, but not Si) and the Sn-based negative active material may include Sn, SnO₂, Sn-R alloy (wherein R is an alkali metal, an alkaline-earth metal, a Group 13 element, a Group 14 element, a Group 15 element, a Group 16 element, a transition metal, a rare earth element, and a combination thereof, but not Sn). At least one of these materials may be mixed with SiO₂. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, TI, Ge, P, As, Sb, Bi, S, Se, Te, Po, and a combination thereof.

The silicon-carbon composite may be, for example, a silicon-carbon composite including a core including crystalline carbon and silicon particles and an amorphous carbon coating layer disposed on the surface of the core. The crystalline carbon may be artificial graphite, natural graphite, or a combination thereof. The amorphous carbon precursor may be a coal-based pitch, mesophase pitch, petroleum-based pitch, coal-based oil, petroleum-based heavy oil, or a polymer resin such as a phenol resin, a furan resin, or a polyimide resin. In this case, the content of silicon may be about 10 wt% to about 50 wt% based on the total weight of the silicon-carbon composite. In addition, the content of the crystalline carbon may be about 10 wt% to about 70 wt% based on the total weight of the silicon-carbon composite, and the content of the amorphous carbon may be about 20 wt% to about 40 wt% based on the total weight of the silicon-carbon composite. In addition, a thickness of the amorphous carbon coating layer may be about 5 nm to about 100 nm. An average particle diameter (D50) of the silicon particles may be about 10 nm to about 20 µm. The average particle diameter (D50) of the silicon particles may be preferably about 10 nm to about 200 nm. The silicon particles may exist in an oxidized form, and in this case, an atomic content ratio of Si:O in the silicon particles indicating a degree of oxidation may be about 99:1 to about 33:67. The silicon particles may be SiOₓ particles, and in this case, the range of x in SiOₓ may be greater than about 0 and less than about 2. In the present specification, unless otherwise defined, an average particle diameter (D50) indicates a particle diameter where an accumulated volume is about 50 volume% in a particle size distribution.

The Si-based negative active material or Sn-based negative active material may be mixed with the carbon-based negative active material. When the Si-based negative active material or Sn-based negative active material and the carbon-based negative active material are mixed and used, the mixing ratio may be a weight ratio of about 1:99 to about 90:10.

In the negative active material layer, the negative active material may be included in an amount of about 95 wt% to about 99 wt% based on the total weight of the negative active material layer.

In an embodiment, the negative active material layer further includes a binder, and may optionally further include a conductive material. The content of the binder in the negative active material layer may be about 1 wt% to about 5 wt% based on the total weight of the negative active material layer. In addition, when the conductive material is further included, the negative active material layer may include about 90 wt% to about 98 wt% of the negative active material, about 1 wt% to about 5 wt% of the binder, and about 1 wt% to about 5 wt% of the conductive material.

The binder serves to well adhere the negative active material particles to each other and also to adhere the negative active material to the current collector. The binder may be a water-insoluble binder, a water-soluble binder, or a combination thereof.

Examples of the water-insoluble binder include polyvinyl chloride, carboxylated polyvinyl chloride, polyvinyl fluoride, an ethylene oxide-containing polymer, an ethylene propylene copolymer, polystyrene, polyvinylpyrrolidone, polyurethane, polytetrafluoro ethylene, polyvinylidene fluoride, polyethylene, polypropylene, polyamideimide, polyimide, or a combination thereof.

The water-soluble binder may include a rubber binder or a polymer resin binder. The rubber binder may be selected from a styrene-butadiene rubber, an acrylated styrene-butadiene rubber, an acrylonitrile-butadiene rubber, an acrylic rubber, a butyl rubber, a fluororubber, and a combination thereof. The polymer resin binder may be selected from polyethylene oxide, polyvinylpyrrolidone, polyepichlorohydrin, polyphosphazene, polyacrylonitrile, an ethylene propylene diene copolymer, polyvinylpyridine, chlorosulfonated polyethylene, latex, a polyester resin, an acrylic resin, a phenol resin, an epoxy resin, polyvinyl alcohol, and a combination thereof.

When a water-soluble binder is used as the negative electrode binder, a cellulose-based compound capable of imparting viscosity may be further included as a thickener. As the cellulose-based compound, one or more of carboxymethyl cellulose, hydroxypropylmethyl cellulose, methyl cellulose, or alkali metal salts thereof may be mixed and used. As the alkali metal, Na, K or Li may be used. The amount of the thickener used may be about 0.1 parts by weight to about 3 parts by weight based on 100 parts by weight of the negative active material.

The conductive material is included to provide electrode conductivity. Any electrically conductive material may be used as a conductive material unless it causes a chemical change. Examples of the conductive material include a carbon-based material such as natural graphite, artificial graphite, carbon black, acetylene black, ketjen black, a carbon fiber, and the like; a metal-based material of a metal powder or a metal fiber including copper, nickel, aluminium, silver, and the like; a conductive polymer such as a polyphenylene derivative; or a mixture thereof.

The current collector may include one selected from a copper foil, a nickel foil, a stainless steel foil, a titanium foil, a nickel foam, a copper foam, a polymer substrate coated with a conductive metal, and a combination thereof.

### Rechargeable Lithium Battery

Another embodiment provides a rechargeable lithium battery including a positive electrode, a negative electrode, a separator between the positive electrode and the positive electrode, and an electrolyte. Here, the aforementioned electrode may be the positive electrode and negative electrode.

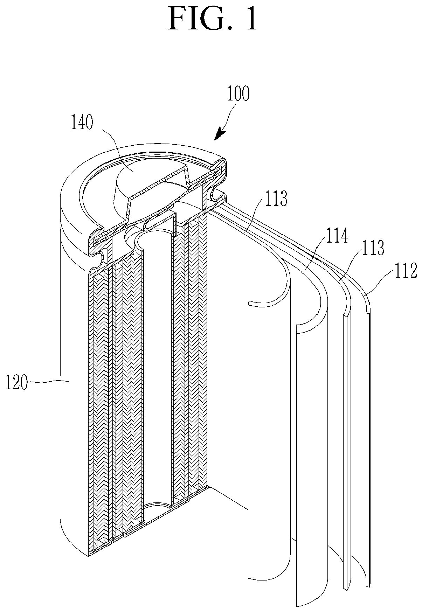

FIG. 1 is a schematic view illustrating a rechargeable lithium battery according to an embodiment. Referring to FIG. 1, a rechargeable lithium battery 100 according to an embodiment of the present disclosure includes a battery cell including a positive electrode 114, a negative electrode 112 facing the positive electrode 114, a separator 113 between the positive electrode 114 and the negative electrode 112, and an electrolyte for a rechargeable lithium battery impregnating the positive electrode 114, negative electrode 112, and separator 113, a battery case 120 housing the battery cell, and a sealing member 140 sealing the battery case 120.

The electrolyte includes a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, alcohol-based solvent, or aprotic solvent. Examples of the carbonate-based solvent include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. Examples of the ester-based solvent include methyl acetate, ethyl acetate, n-propyl acetate, dimethyl acetate, methyl propionate, ethyl propionate, γ-butyrolactone, decanolide, valerolactone, mevalonolactone, caprolactone, and the like. The ether-based solvent may be dibutyl ether, tetraglyme, diglyme, dimethoxyethane, 2-methyltetrahydrofuran, tetrahydrofuran, and the like and the ketone-based solvent may be cyclohexanone, and the like. In addition, the alcohol-based solvent may be ethyl alcohol, isopropyl alcohol, etc. and the aprotic solvent may be nitriles such as R-CN (where R is a C2 to C20 linear, branched, or cyclic hydrocarbon group and may include a double bond, an aromatic ring, or an ether bond), amides such as dimethylformamide, dioxolanes such as 1,3-dioxolane, sulfolanes, and the like.

The non-aqueous organic solvent may be used alone or in a mixture. When the non-aqueous organic solvent is used in a mixture, the mixture ratio may be controlled in accordance with a desirable battery performance.

In addition, in the case of the carbonate-based solvent, a mixture of a cyclic carbonate and a chain carbonate may be used. In this case, when the cyclic carbonate and the chain carbonate are mixed in a volume ratio of about 1:1 to about 1:9, the electrolyte solution may exhibit excellent performance.

The non-aqueous organic solvent may further include an aromatic hydrocarbon-based organic solvent in addition to the carbonate-based solvent. In this case, the carbonate-based solvent and the aromatic hydrocarbon-based organic solvent may be mixed in a volume ratio of about 1:1 to about 30:1.

The aromatic hydrocarbon-based organic solvent may be an aromatic hydrocarbon-based compound represented by Chemical Formula I.

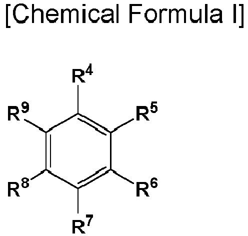

In Chemical Formula I, R⁴ to R⁹ are the same or different and are selected from hydrogen, a halogen, a C1 to C10 alkyl group, a C1 to C10 haloalkyl group, and a combination thereof.

Specific examples of the aromatic hydrocarbon-based solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte solution may further include vinylene carbonate or an ethylene carbonate-based compound represented by Chemical Formula II as an additive in order to improve cycle-life of a battery.

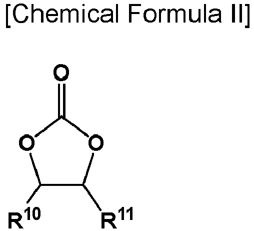

In Chemical Formula II, R¹⁰ and R¹¹ are the same or different and selected from hydrogen, a halogen, a cyano group, a nitro group, and fluorinated C1 to C5 alkyl group, provided that at least one of R¹⁰ and R¹¹ is a halogen, a cyano group, a nitro group, or fluorinated C1 to C5 alkyl group, and R¹⁰ and R¹¹ are not simultaneously hydrogen.

Examples of the ethylene carbonate-based compound may be difluoro ethylenecarbonate, chloroethylene carbonate, dichloroethylene carbonate, bromoethylene carbonate, dibromoethylene carbonate, nitroethylene carbonate, cyanoethylene carbonate, or fluoroethylene carbonate. The amount of the additive for improving cycle-life may be used within an appropriate range.

The lithium salt dissolved in the non-aqueous organic solvent supplies lithium ions in a battery, enables a basic operation of a rechargeable lithium battery, and improves transportation of the lithium ions between positive and negative electrodes.

Examples of the lithium salt include at least one supporting salt selected from LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide): LiFSI), LiC₄F₉SO₃, LiClO₄, LiAlO₂, LiAlCl₄, LiPO₂F₂, LiN(CₓF₂ₓ₊₁SO₂)(C_{y}F_{2y+1}SO₂), wherein x and y are natural numbers, for example, an integer ranging from 1 to 20, lithium difluoro(bisoxalato) phosphate, LiCI, Lil, LiB(C₂O₄)₂ (lithium bis(oxalato) borate, LiBOB), and lithium difluoro(oxalato)borate (LiDFOB).

The lithium salt may be used in a concentration ranging from about 0.1 M to about 2.0 M. When the lithium salt is included at the above concentration range, an electrolyte may have excellent performance and lithium ion mobility due to optimal electrolyte conductivity and viscosity.

The separator 113 separates a positive electrode 114 and a negative electrode 112 and provides a transporting passage for lithium ions and may be any generally-used separator in a lithium ion battery. In other words, it may have low resistance to ion transport and excellent impregnation for an electrolyte solution. For example, the separator may be selected from a glass fiber, polyester, polyethylene, polypropylene, polytetrafluoroethylene, or a combination thereof. It may have a form of a non-woven fabric or a woven fabric. For example, in a lithium ion battery, a polyolefin-based polymer separator such as polyethylene separator and polypropylene separator is mainly used. In order to ensure the heat resistance or mechanical strength, a coated separator including a ceramic component or a polymer material may be used. Optionally, it may have a mono-layered or multi-layered structure.

Rechargeable lithium batteries may be classified as lithium ion batteries, lithium ion polymer batteries, and lithium polymer batteries according to the presence of a separator and the kind of electrolyte used therein. The rechargeable lithium batteries may have a variety of shapes and sizes, and include cylindrical, prismatic, coin, or pouch-type batteries, and may be thin film batteries or may be rather bulky in size. Structures and manufacturing methods for lithium ion batteries pertaining to this disclosure are well known in the art.

The rechargeable lithium battery according to an embodiment may be used in an electric vehicle (EV), and a hybrid electric vehicle such as a plug-in hybrid electric vehicle (PHEV) because it implements a high capacity and has excellent storage stability, cycle-life characteristics, and high rate characteristics at high temperatures.

Hereinafter, examples of the present disclosure and comparative examples are described. It is to be understood, however, that the examples are for the purpose of illustration and are not to be construed as limiting the present disclosure.

### Comparative Example 1

An NaOH aqueous solution is added to distilled water to adjust pH into 13.4. Then, LiNi_{0.91}Co_{0.05}Al_{0.04}O₂ large particles with a particle diameter of about 17µm and LiNi_{0.91}Co_{0.05}Al_{0.04}O₂ small particles with a particle diameter of about 3µm are added thereto in a weight ratio of 8:2 to start washing. The obtained mixture is stirred, while a cobalt sulfate aqueous solution is added thereto in a predetermined ratio for 1 hour. Subsequently, the resultant is dried at about 120 °C for 10 hours, obtaining a pre-positive active material coated with cobalt. This pre-positive active material is heat-treated at 700 °C, obtaining a final positive active material. Herein, through this heat treatment of the pre-positive active material, a portion of the coated cobalt compound penetrates into secondary particles of the positive active material. The final positive active material includes a first positive active material with a particle diameter of about 17 µm to 18µm and a second positive active material with a particle diameter of about 3µm to 4µm.

### Example 1

A cobalt sulfate aqueous solution is added to distilled water. At this time, the pH is 7.4. Subsequently, LiNi_{0.91}Co_{0.05}Al_{0.04}O₂ large particles with a particle diameter of about 17µm and LiNi_{0.91}Co_{0.05}Al_{0.04}O₂ small particles with a particle diameter of about 3µm in a weight ratio of 8:2 are added thereto to start washing. Then, an NaOH aqueous solution is added thereto in a predetermined ratio for 1 hour, while agitated. The final pH is 13.4. Subsequently, the resultant is dried at about 120 °C for 10 hours, obtaining a pre-positive active material coated with cobalt. This pre-positive active material is heat-treated at 700 °C, obtaining a final positive active material. The final positive active material includes a first positive active material with a particle diameter of about 17 µm to 18µm and a second positive active material with a particle diameter of about 3 µm to 4µm.

### Evaluation Example 1: Comparison of Coating Results

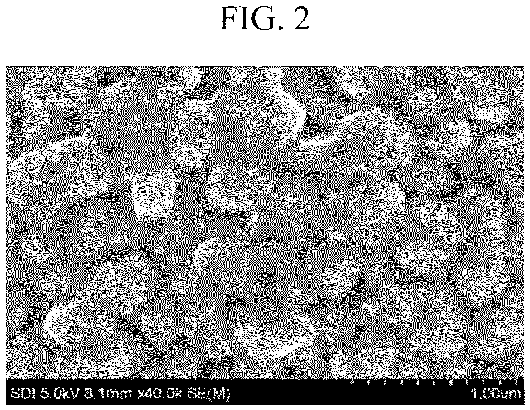

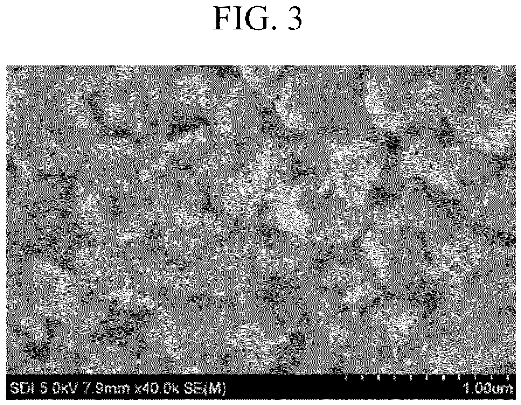

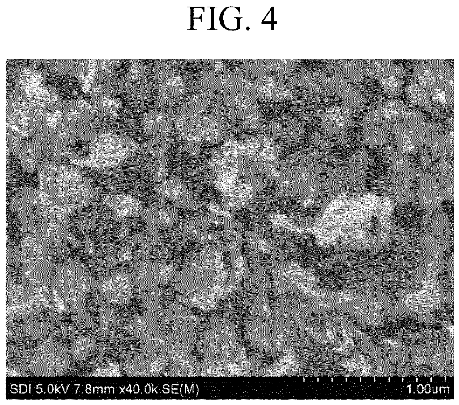

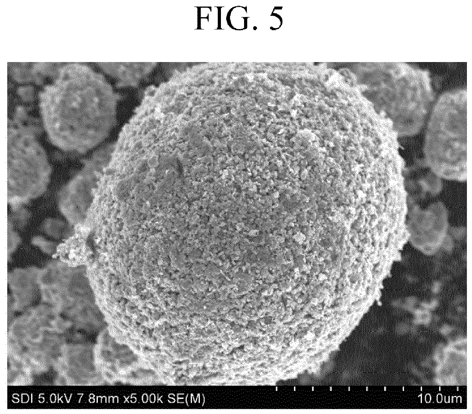

FIGS. 2 to 5 show scanning electron micrographs of the positive active material according to Comparative Example 1, FIG. 2 shows the positive active material in the washing step, FIG. 3 shows the pre-positive active material, and FIGS. 4 and 5 show photographs of the final positive active material. Referring to FIGS. 2 to 5, the final positive active material of Comparative Example 1 is seen to be non-uniformly coated with a plate-shaped cobalt compound.

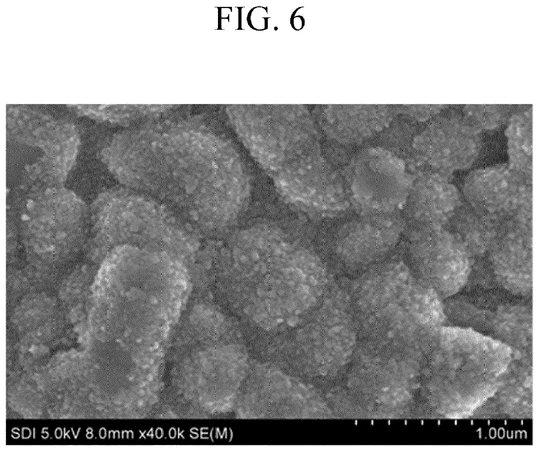

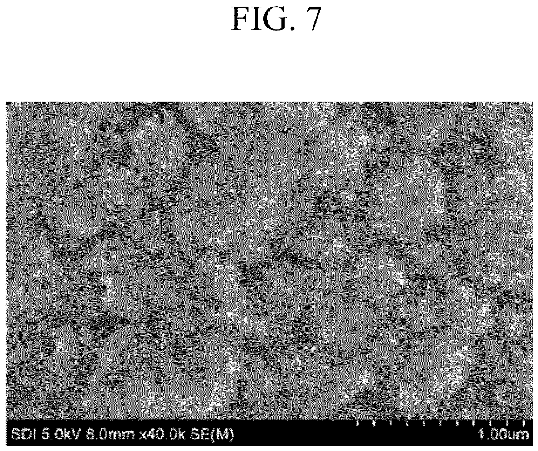

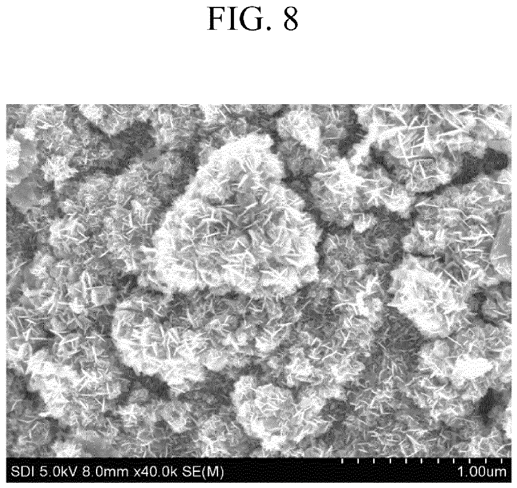

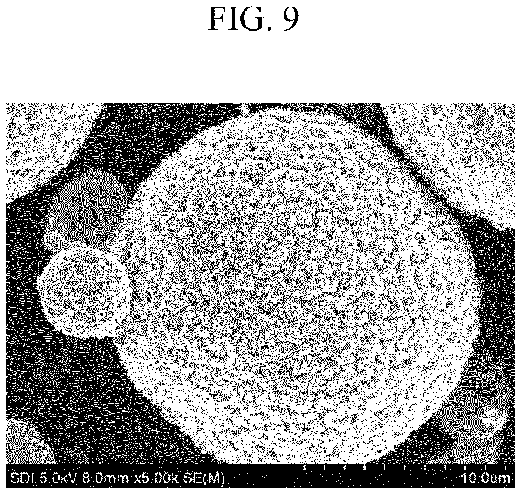

FIGS. 6 to 9 are scanning electron micrographs of the positive active material according to Example 1, FIG. 6 shows the active material in the washing step, FIG. 7 shows the pre-positive active material, and FIGS. 8 and 9 show photographs of the final positive active material. Referring to FIGS. 6 to 9, Example 1 shows that the cobalt compound is uniformly precipitated on the surface of the positive active material from the washing step, and the pre-positive active material and the final positive active material are also uniformly coated with the needle-shaped cobalt compound.

This difference between Comparative Example 1 and Example 1 may be explained to be caused by a shape of the cobalt compound according to the pH. After adding a cobalt sulfate aqueous solution to distilled water without an positive active material, when pH is increased into 7.5, 9, 10, 11, 12, 13, and the like, a wave pattern appears at first (pH 7.5 to 10), but a needle-like shape appears at about pH 10 to 12, and a hexagonal plate shape appears at about pH 12 to 13. Since the cobalt coating starts at pH 13.4 in Comparative Example 1, plate-shaped cobalt (βtype) may be easily produced. On the contrary, since the cobalt coating starts at pH 7.4 in Example 1, wave-patterned cobalt (αtype) may be easily produced, and accordingly, the αtype cobalt may be uniformly coated on the surface of the positive active material.

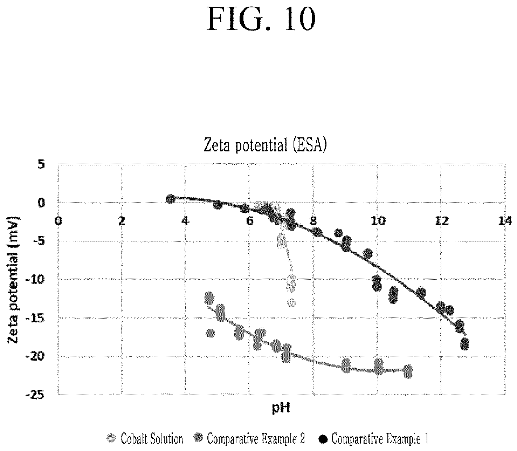

On the other hand, when cobalt coating is processed in the method of Comparative Example 1 for an positive active material including nickel in an amount of less than 90 mol%, for example, 88 mol% based on a total amount of transition metals excluding lithium (hereinafter, referred to as Comparative Example 2), the cobalt is relatively uniformly coated, but Comparative Example 1 including nickel in an amount of 90 mol% or more exhibits very non-uniform coating. In order to analyze this result, the positive active materials of Comparative Examples 1 and 2 are analyzed through ESA (electrokinetic sonic amplitude) to measure zeta potentials, and the results are shown in FIG. 10. Referring to FIG. 10, two positive active materials of Comparative Examples 1 (Ni91) and 2 (Ni88) exhibit different potential behaviors on the surfaces according to pH. Accordingly, as for the positive active materials including 90 mol% or more of nickel, Comparative Example 1 and Example 1 exhibit significantly different coating quality due to fine adjustment of pH.

### Evaluation Example 2: SEM-EDS Analysis

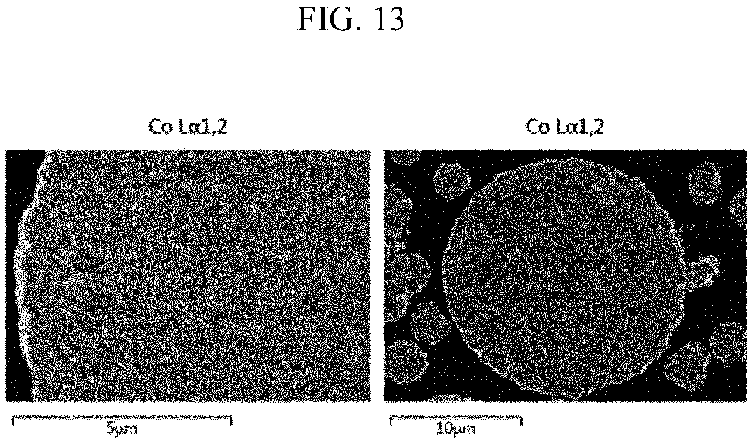

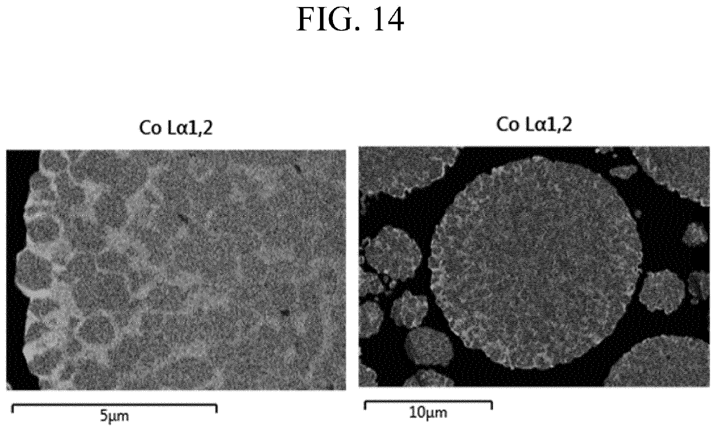

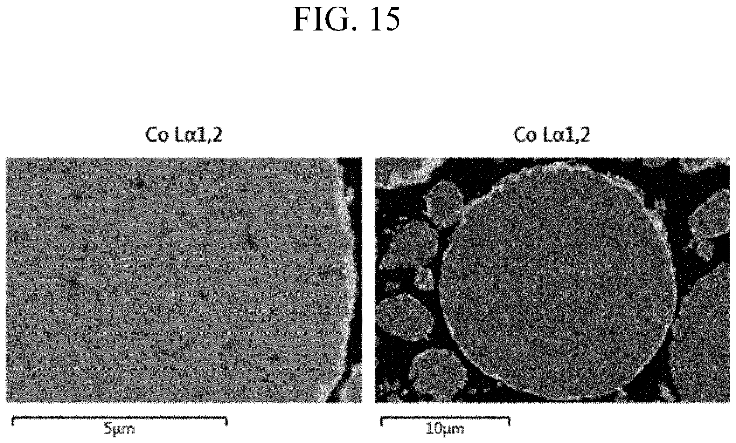

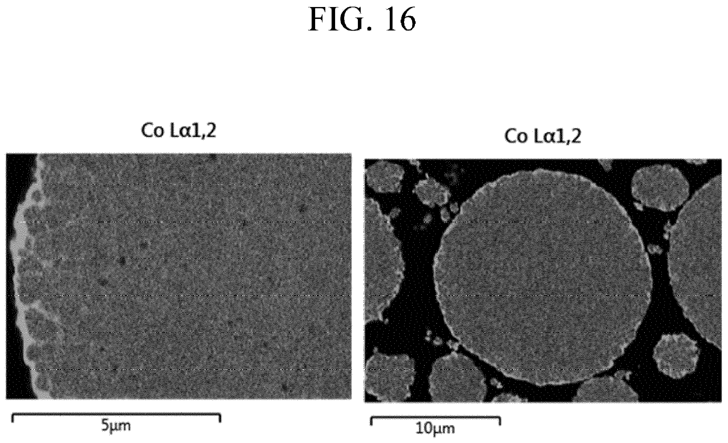

The scanning electron microscope (SEM) photographs of the pre-positive active material and the final positive active material of Comparative Example 1 and the pre-positive active material and the final positive active material of Example 1 are energy dispersive X-ray spectroscopy (EDS)-analyzed, and the results are shown in FIGS. 13 to 16. In FIGS. 13 to 16, light gray indicates cobalt. FIG. 13 is the pre-positive active material photograph of Example 1, and FIG. 14 is the final positive active material photograph of Example 1. FIG. 15 is the pre-positive active material photograph of Comparative Example 1, and FIG. 16 is the positive active material photograph of Comparative Example 1.

Comparing FIG. 13 with FIG. 15, the cobalt compound is more uniformly coated with a higher density on the surface of pre-positive active material of Example 1 than on that of Comparative Example 1. In addition, comparing FIG. 14 with FIG. 16, Example 1, compared with Comparative Example 1, exhibits that the cobalt active material is more coated even inside the secondary particles, that is, on the surface of the primary particles inside the secondary particles in the final positive active material after the heat treatment.

In addition, referring to FIGS. 13 and 14, in the final positive active material of Example 1, a cobalt coating portion (grain boundary coating) on the surface of the primary particles inside the secondary particle has a thickness of 1 nm to 10 nm (about 5 nm or so).

### Evaluation Example 3: Analysis of Cobalt Content

The pre-positive active material and the final positive active material of Comparative Example 1 and the pre positive active material and the final positive active material of Example 1 are EP-EDS (energy dispersive X-ray spectroscopy)-analyzed to measure each content of nickel, cobalt, and the like on the surfaces and calculate a cobalt content (atomic%) to a total amount of nickel and cobalt on each surface, and the results are shown in Table 1.

**(Table 1)**

| Cobalt content based on transition metal on the surface of the positive active material of Example 1 (atom ic%) | | Cobalt content based on transition metal on the surface of the positive active material of Comparative Example 1 (atomic%) | |
|---|---|---|---|
| Entire pre-active material of | 77.63 | Entire pre-active material of | 71.48 |
| Example1 | | Comparative Example1 | |
| Entire final active material of Example1 | 34.28 | Entire final material of Comparative Example1 | 44.47 |
| Final/pre-active material | 44.2% | Final/pre-active material | 62% |
| | | | |
| Pre-first active material of Example1 (large particles) | 86.01 | Pre-first active material of Comparative Example1 (large particles) | 72.84 |
| Final first active material of Example1 (large particles) | 37.18 | Final first active material of Comparative Example 1 (large particles) | 43.21 |
| Final/pre-first active material | 43.2% | Final/pre-first active material | 59.3% |
| | | | |
| Pre-second active material of Example 1 (small particles) | 60.44 | Pre-second active material of Comparative Example 1 (small particles) | 61.42 |
| Final second active material of Example1 (small particles) | 28.04 | Final second active material of Comparative Example 1 (small particles) | 45.78 |
| Final/pre-second active material | 46.4% | Final/pre-second active material | 74.5% |
| | | | |
| Final first active material of | 37.18 | Final first active material of | 43.21 |
| Example1 (large particles) | | Comparative Example 1 (large particles) | |
| Final second active material of Example 1 (small particles) | 28.04 | Final second active material of Comparative Example 1 (small particles) | 45.78 |
| Large particles/small particles | 1.33 | Large particles/small particles | 0.94 |

First, as shown in the upper part of Table 1, as for the entire positive active materials in which large and small particles are mixed and specifically, the pre-positive active materials in a dried state after cobalt-coating, Example 1 exhibit a higher cobalt content than Comparative Example 1. The reason is that cobalt is more uniformly coated with higher density in the pre-positive active material of Example 1. In addition, as for the final positive active materials obtained by heat-treating the pre-positive active materials, Example 1 exhibits a lower cobalt content than Comparative Example 1. The reason is that when heat-treated under the same condition, Example 1 exhibits a higher coating ratio of a cobalt compound on the surface (grain boundary) of the primary particles inside the secondary particles, that is, higher coating capability of penetrating the cobalt compound into the secondary particles.

Specifically, as for a ratio (B/A) of the cobalt content (B) based on the transition metal on the surface of the final positive active material to the cobalt content (A) based on the transition metal on the surface of the pre-positive active material, Example 1 is 44.2%, and Comparative Example 1 is 62%. In Example 1, 44.2% of the total cobalt content remained on the surface of the positive active material, while 55.8% of the rest of the cobalt content penetrated into the positive active material, but in Comparative Example 1, 62% of the total cobalt content remained on the surface of the positive active material, while 38% of the rest of the cobalt content penetrated into the positive active material. Accordingly, the cobalt content penetrated into the positive active material, that is, coated on the grain boundary is larger in Example 1 than Comparative Example 1.

Herein, (B) corresponds to a cobalt content (C) of the first coating portion in the final positive active material, (A-B) obtained by subtracting (B) from (A) corresponds to a cobalt content (D) of the second coating portion penetrated into the secondary particles in the final positive active material. Accordingly, Example 1 exhibits C/(C+D) of 44.2% and D/(C+D) of 55.8% in the entire positive active material in which the large particles and the small particles are mixed.

Furthermore, as for the first positive active material consisting of the large particles in Table 1, Example 1 also exhibits a (B/A) ratio of 43.2%, while Comparative Example 1 exhibits a (B/A) ratio of 59.3%, which is smaller than that of Example 1. In other words, as for the first positive active material, a larger content of cobalt is also coated inside the positive active material in Example 1 than Comparative Example 1. The first positive active material of Example 1 exhibits C1/(C1+D1) of 43.2% and D1/(C1+D1) of 56.8%.

As for the second positive active material of the small particles, Example 1 exhibits a smaller (B/A) ratio of 46.4% than 74.5% of Comparative Example 1. In other words, the second positive active material of Example 1 also is internally coated in a larger cobalt content than that of Comparative Example 1. The second positive active material of Example 1 exhibits C2/(C2+D2) of 46.4% and D2/(C2+D2) of 53.6%.

In addition, referring to the bottom of Table 4, in Example 1, more cobalt is coated on the surface of the first positive active material (large particles) than that of the second active material (small particles). Specifically, a ratio (X/Y) of a cobalt content (X, 37.18) based on a total amount of transition metal on the surface of the first positive active material relative to a cobalt content (Y, 28.04) based on a total amount of transition metal on the surface of the second positive active material is 1.33, which is greater than 1.

On the contrary, when the conventional wet coating method is used as in Comparative Example 1, more cobalt is coated on the surface of the second active material than on that of the first positive active material. Specifically, a ratio (X/Y) of a cobalt content (X, 43.21) based on a total amount of transition metal on the surface of the first active material relative to a cobalt content (Y, 45.78) based on a total amount of transition metal on the surface of the second positive active material surface is calculated to be 0.94.

### Evaluation Example 4: Comparison of Charge-discharge Capacity and Efficiency of Half-cell and Room Temperature Cycle-life Characteristics

Each coin half-cell is manufactured by applying the positive active material prepared in Comparative Example 1 and Example 1. That is, 95 wt% of the positive active material, 3 wt% of a polyvinylidene fluoride binder, and 2 wt% of a ketjen black conductive material are mixed in an N-methyl pyrrolidone solvent to prepare a positive active material slurry. The positive active material slurry is applied to an aluminium current collector, dried and compressed to manufacture a positive electrode. A coin half-cell is manufactured by disposing a separator having a polyethylene-polypropylene multilayer structure is disposed between the manufactured positive electrode and lithium metal counter electrode, and injecting an electrolyte solution in which 1.0 M LiPF₆ lithium salt was added to a solvent in which ethylene carbonate and diethyl carbonate are mixed in a volume ratio of 50:50.

Each coin half-cell according to Comparative Example 1 and Example 1 are charged at a constant current of 0.2 C to an upper limit voltage of 4.3 V until it drops down to 0.05 C, which is set as a cut-off condition, under the constant voltage and then, discharged down to a discharge cut-off voltage of 3.0 V at 0.2 C at 25 °C and then, measured with respect to initial discharge capacity. Herein, a ratio of discharge capacity relative to charge capacity is calculated as efficiency, and the results are shown in Table 2. In addition, the charge/discharge cycle is 30 times repeated at 25 °C to evaluate capacity retention, that is, room temperature cycle-life characteristics, and the results are shown in Table 2.

**(Table 2)**

| | Charge capacity (mAh/g) | Discharge capacity (mAh/g) | Efficien cy (%) | Room temperature cycle-life (%, @30 cycles) |
|---|---|---|---|---|
| Comparative Example 1 | 236.6 | 204.8 | 86.6 | 99.1 |
| Example 1 | 237.6 | 205.9 | 86.7 | 99.9 |

Referring to Table 2, Example 1 exhibited high charge capacity and discharge capacity and also, high charge and discharge efficiency and in addition, improved cycle-life characteristics at room temperature, compared with Comparative Example 1.

### Evaluation Example 5: Comparison of Room Temperature and High Temperature Cycle-life Characteristics of Full Cells

The positive active materials prepared in Comparative Example 1 and Example 1 are applied to manufacture each full-cell. After equally preparing a positive electrode in Evaluation Example 4, a negative electrode is manufactured by mixing 97.3 wt% of graphite as a negative active material, 0.5 wt% of denka black, 0.9 wt% of carboxylmethyl cellulose, and 1.3 wt% of styrenebutadiene rubber in an aqueous solvent to prepare negative active material slurry, coating the negative active material slurry on a copper foil, and then, drying and compressing it.

A full-cell is manufactured by sequentially stacking the manufactured positive electrode, a separator having a polyethylene polypropylene multilayer structure, and the manufactured negative electrode, and then, an electrolyte solution in which 1.0 M LiPF₆ lithium salt was added to a solvent in which ethylene carbonate and diethyl carbonate are mixed in a volume ratio of 50:50 is injected.

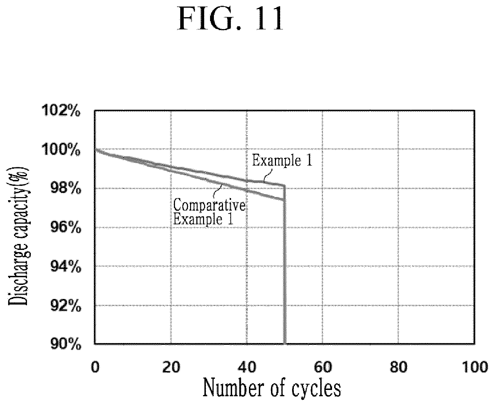

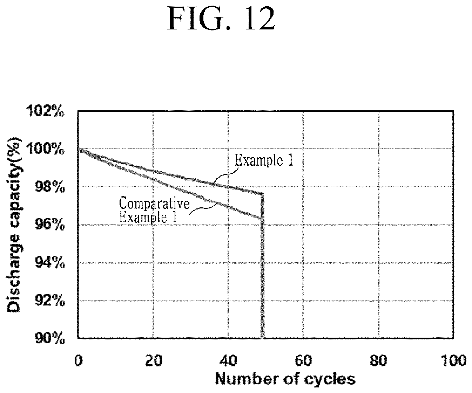

Each full-cell according to Example 1 and Comparative Example 1 is charged up to a voltage of 4.3 V at a 0.7 C rate in a constant current mode at room temperature (25 °C) and a high temperature (45 °C) and subsequently, cut off at a 0.1 C rate in a constant voltage mode of 4.3 V. Then, the cells are discharged down to a voltage of 3.0 V at a 1 C rate, and this charge and discharge cycle is 50 times repeated. The room temperature cycle-life characteristic evaluation results are shown in FIG. 11, the high temperature cycle-life characteristic evaluation results are shown in FIG. 12, and capacity retentions at the 50^{th} cycle are provided in Table 3.

**(Table 3)**

| | 50^{th} cycle room temperature capacity retention (%) | 50^{th} cycle high temperature capacity retention (%) |
|---|---|---|
| Comparative Example 1 | 97.4 | 96.3 |
| Example 1 | 98.1 | 97.6 |

Referring to FIGS. 11 and 12 and Table 3, the cell of Example 1 exhibits excellent room temperature and high temperature cycle-life characteristics compared with that of Comparative Example 1.

While this disclosure has been described in connection with what is presently considered to be practical example embodiments, it is to be understood that the invention is not limited to the disclosed embodiments. On the contrary, it is intended to cover various modifications and equivalent arrangements included within the scope of the appended claims.

**<Description of Symbols>**

| | | | |
|---|---|---|---|
| 100: | rechargeable lithium battery | 112: | negative electrode |
| 113: | separator | 114: | positive electrode |
| 120: | battery case | 140: | sealing member |

## Claims

1. A positive active material for a rechargeable lithium battery, comprising
a first positive active material that comprises a lithium nickel-based composite oxide having a nickel content of greater than or equal to 90 mol% based on the total amount of metals excluding lithium, wherein the first positive active material comprises secondary particles in which a plurality of primary particles are aggregated, and comprises a cobalt coating layer on the surface of the secondary particle, and the secondary particles have a particle diameter of 10 µm to 25 µm, and
a second positive active material that comprises a lithium nickel-based composite oxide having a nickel content of greater than or equal to 90 mol% based on the total amount of metals excluding lithium, wherein the second positive active material comprises secondary particles in which a plurality of primary particles are aggregated, and comprises a cobalt coating layer on the surface of the secondary particle, and the secondary particles have a particle diameter of 1 µm to 9 µm,
wherein a ratio (X/Y) of the cobalt content (X, atomic%) based on the total amount of transition metals excluding lithium on the surface of the secondary particle of the first positive active material to the cobalt content (Y, atomic%) based on the total amount of transition metals excluding lithium on the surface of the secondary particle of the second positive active material is greater than 1.

2. The positive active material of claim 1, wherein
the cobalt content (X) based on the total amount of transition metals excluding lithium on the surface of the secondary particle of the first positive active material ranges from 25 atomic% to 60 atomic%, and
the cobalt content (Y) based on the total amount of transition metals excluding lithium on the surface of the secondary particle of the second positive active material ranges from 15 atomic% to 45 atomic%.

3. The positive active material of claim 1 or claim 2, wherein on the entire surface of the positive active material comprising the first positive active material and the second positive active material, a cobalt content based on the total amount of transition metals excluding lithium ranges from 20 atomic% to 55 atomic%.

4. The positive active material of any one of claims 1 to 3, wherein
in the first positive active material, the cobalt coating layer on the surface of the secondary particle is referred to as a first coating portion,
the first positive active material further comprises a second coating portion that is a cobalt coating layer on the surface of the primary particles in the inner portion of the secondary particles, and
a ratio (C1/(C1+D1)) of the cobalt content (C1) of the first coating portion to the sum of the cobalt content (C1) of the first coating portion and the cobalt content (D1) of the second coating portion ranges from 0.20 to 0.49.

5. The positive active material of any one of claims 1 to 4, wherein
in the second positive active material, the cobalt coating layer on the surface of the secondary particle is referred to as a first coating portion,
the second positive active material further comprises a second coating portion that is a cobalt coating layer on the surface of the primary particles in the inner portion of the secondary particles, and
a ratio (C2/(C2+D2)) of the cobalt content (C2) of the first coating portion to the sum of the cobalt content (C2) of the first coating portion and the cobalt content (D2) of the second coating portion ranges from 0.20 to 0.49.

6. The positive active material of claim 4 or claim 5, wherein the second coating portion has a thickness of 1 nm to 250 nm.

7. The positive active material of any one of claims 1 to 6, wherein the first positive active material is comprised in an amount of 50 wt% to 90 wt% and the second positive active material is comprised in an amount of 10 wt% to 50 wt% based on the total amount of the first positive active material and the second positive active material.

8. A rechargeable lithium battery, comprising
the positive electrode comprising a positive active material of any one of claims 1 to 7, a negative electrode, and an electrolyte.

9. A method of preparing a positive active material for a rechargeable lithium battery, comprising
preparing a first aqueous solution that comprises a cobalt salt and composite particles comprising a lithium nickel-based composite oxide and said composite particles are in the form of secondary particles in which a plurality of primary particles are aggregated, and the first aqueous solution having a pH of 6 to 8,
adding an alkali material into the first aqueous solution to obtain a second aqueous solution,
obtaining a pre-positive active material comprising the composite particles and a cobalt coating layer formed on the surface thereof in the second aqueous solution, and
heat-treating the pre-positive active material to obtain a final positive active material.

10. The method of claim 9, wherein the second aqueous solution has a pH of 12 to 14.

11. The method of claim 9 or claim 10, wherein:
(i) on the surface of the pre-positive active material, a cobalt content (A) based on the total amount of transition metals excluding lithium ranges from 56 atomic% to 90 atomic%; and/or
(ii) on the surface of the final positive active material, a cobalt content (B) based on the total amount of transition metals excluding lithium ranges from 15 atomic% to 55 atomic%; and/or
(iii) a ratio (B/A) of the cobalt content (B) based on the total amount of transition metals excluding lithium on the surface of the final positive active material to the cobalt content (A) based on the total amount of transition metals excluding lithium on the surface of the pre-positive active material ranges from 0.3 to 0.49; and/or
(iv) the final positive active material comprises secondary particles in which a plurality of primary particles are aggregated and the final positive active material comprises a first coating portion that is a cobalt coating layer on the surface of the secondary particle and further comprises a second coating portion that is a cobalt coating layer on the surface of the primary particles in the inner portion of the secondary particles, and
a ratio (C/(C+D)) of the cobalt content (C) of the first coating portion based on the sum of the cobalt content (C) of the first coating portion and the cobalt content (D) of the second coating portion in the final positive active material ranges from 0.30 to 0.49.

12. The method of any one of claims 9 to 11, wherein in the lithium nickel-based composite oxide, a nickel content is greater than or equal to 90 mol% based on the total amount of metals excluding lithium.

13. The method of any one of claims 9 to 12, wherein
the composite particles are a mixture of large particles having a particle diameter of 10 µm to 25 µm and small particles having a particle diameter of 1 µm to 9 µm, and
the final positive active material is a mixture of a first positive active material having a particle diameter of 10 µm to 25 µm and a second positive active material having a particle diameter of 1 µm to 9 µm.

14. The method of claim 13, wherein:
(i) a ratio (X/Y) of a cobalt atomic content (X) based on the total amount of transition metals excluding lithium on the surface of the first positive active material to a cobalt atomic content (Y) based on the total amount of transition metals excluding lithium on the surface of the second positive active material is greater than 1; and/or
(ii) the cobalt content (X) based on the total amount of transition metals excluding lithium on the surface of the secondary particle of the first positive active material ranges from 25 atomic% to 60 atomic%, and
the cobalt content (Y) based on the total amount of transition metals excluding lithium on the surface of the secondary particle of the second positive active material ranges from 15 atomic% to 45 atomic%; and/or
(iii) on the entire surface of the positive active material comprising the first positive active material and the second positive active material, a cobalt content based on the total amount of transition metals excluding lithium ranges from 20 atomic% to 55 atomic%; and/or
(iv) the composite particles are a mixture of 50 wt% to 90 wt% of the large particles and 10 wt% to 50 wt% of the small particles.

15. A rechargeable lithium battery comprising a positive electrode comprising a positive active material prepared by the method according to any one of claims 9 to 14, a negative electrode, and an electrolyte.
